(19) **Europäisches Patentamt European Patent Office Office européen des brevets**

(11) **EP 4 168 288 B1**

(12) **FASCICULE DE BREVET EUROPEEN**

(45) Date de publication et mention de la délivrance du brevet:
**20.08.2025 Bulletin 2025/34**

(21) Numéro de dépôt: **21729870.2**

(22) Date de dépôt: **31.05.2021**

(51) Classification Internationale des Brevets (IPC):
*B62D 5/04* (2006.01)     *B62D 15/02* (2006.01)
*B62D 6/00* (2006.01)     *B62D 7/15* (2006.01)
*B60T 8/172* (2006.01)

(52) Classification Coopérative des Brevets (CPC):
**B60T 8/1755; B60T 8/172; B62D 7/159;
B62D 15/025;** B60T 2260/02; B60T 2260/022

(86) Numéro de dépôt international:
**PCT/EP2021/064546**

(87) Numéro de publication internationale:
**WO 2021/254770 (23.12.2021 Gazette 2021/51)**

(54) **DISPOSITIF DE CONTRÔLE DE DIRECTION D'UN VÉHICULE**

STEUERUNGSSYSTEM EINER LENKVORRICHTUNG IN FAHRZEUGEN

CONTROL SYSTEM OF A VEHICLE STEERING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.06.2020 FR 2006428**

(43) Date de publication de la demande:
**26.04.2023 Bulletin 2023/17**

(73) Titulaires:
• **Ampere SAS
92100 Boulogne-Billancourt (FR)**
• **NISSAN MOTOR CO., LTD.
Kanagawa 221-0023 (JP)**

(72) Inventeurs:
• **BOUTRON, Olivier
27940 AUBEVOYE (FR)**
• **MARTINEZ, Didier
27920 SAINT ETIENNE SOUS BAILLEUL (FR)**

(74) Mandataire: **Renault Group
Renault s.a.s.
1 avenue du Golf
FR TCR AVA 055
78084 Guyancourt Cedex (FR)**

(56) Documents cités:
DE-A1- 10 053 604     DE-A1- 4 010 332
FR-A1- 2 876 337

**Description**

L'invention concerne les dispositifs de contrôle de direction d'un véhicule automobile, et elle concerne plus particulièrement les dispositifs de contrôle sur lesquels est implémenté un modèle de comportement dynamique pour permettre d'une part le réglage des trains roulants d'un véhicule avant sa mise sur la route et d'autre part le contrôle de direction en cours de roulage.

Les véhicules sont désormais, dans leur très grande majorité, équipés de châssis pilotés, c'est-à-dire un châssis disposant d'au moins un actionneur piloté. A titre d'exemple non limitatif, les véhicules peuvent être équipés de direction assistée, configurée pour adapter l'angle de braquage des roues aux conditions de roulage du véhicule, ou encore de système de freinage découplé, dans lequel chaque roue est associée à un système de frein piloté indépendamment, de manière à pouvoir générer un effort de freinage spécifique à chaque roue.

Le contrôle de ces actionneurs pilotés est généralement réalisé par une unité de contrôle du véhicule, à l'aide d'un modèle véhicule représentant le comportement cible que doit suivre le véhicule réel. Lors d'essais de mise au point du véhicule, le modèle véhicule est ajusté par essais erreur jusqu'à ce que ce dernier représente un comportement souhaité par la personne en charge du développement du châssis. Et lors du roulage, l'unité de contrôle fait référence à ce modèle véhicule ajusté par essais erreur pour contrôler le fonctionnement des actionneurs pilotés.

Le modèle de dynamique latérale utilisé classiquement pour modéliser le comportement du châssis des véhicules est construit autour d'un modèle dit modèle bicyclette bien connu des ingénieurs de développement et qui basé sur une équation de la dynamique en lacet et une équation de la dynamique de dérive du châssis.

Dans ce modèle bicyclette, le comportement est ajusté par l'intermédiaire de paramètres du véhicule modélisé que sont la masse avant, la masse arrière, les rigidités de dérives équivalentes des trains ou encore l'inertie en lacet.

Tel qu'on peut le constater, les paramètres considérés dans ce modèle sont des paramètres statiques, sans lien direct avec le comportement dynamique du véhicule dont on cherche à contrôler la trajectoire.

Les documents suivants DE 40 10 332 A1, FR 2 876 337 A1 et DE 100 53 604 A1 peuvent être considérés comme art antérieur.

Dans ce contexte, l'invention propose une alternative aux dispositifs de contrôle existants, notamment en considérant d'autres paramètres que ceux classiquement utilisés et en utilisant par exemple un modèle différent que le seul modèle bicyclette précédemment évoqué. L'invention propose ainsi un dispositif de contrôle de direction d'un véhicule automobile comportant au moins un actionneur piloté associé à un système de braquage d'une roue du véhicule et/ou un actionneur piloté associé à un système de freinage découplé au niveau d'une roue du véhicule, ledit dispositif de contrôle comportant au moins une unité de contrôle configurée pour récupérer au moins une valeur caractéristique du roulage du véhicule et pour émettre en fonction de cette ou ces valeurs récupérées une instruction de commande à l'au moins un actionneur piloté. Selon l'invention, l'unité de contrôle comporte un module de calcul sur lequel est implémenté un modèle de comportement dynamique latéral du châssis du véhicule dans lequel au moins une grandeur physique spécifique du comportement dynamique latéral est exprimée en fonction des dérives spécifiques de chaque train de roues avant et arrière du véhicule.

Le système de freinage découplé équipant le véhicule muni du dispositif de contrôle de direction selon l'invention permet un freinage différentié de chaque roue du véhicule via un pilotage spécifique, roue par roue le cas échéant, des actionneurs pilotés.

Le modèle de comportement du châssis est ici particulier en ce qu'il tient compte des dérives spécifiques de chaque train de roues du véhicule, pour tenir compte, contrairement à ce qui a pu être fait précédemment, du comportement dynamique latéral du véhicule automobile et de son châssis. Dès lors, le modèle de comportement est exprimé sous une forme beaucoup plus efficace en termes de mise au point du châssis en faisant apparaître la notion de dérive spécifique.

En effet, la dérive spécifique du train, contrairement à la dérive purement cinématique, prend en compte les paramètres à l'origine de l'angle de dérive à savoir, la rigidité de dérive des pneumatiques, le braquage du train (pince ou ouverture) induit par le roulis et le braquage du train (pince ou ouverture) induit par les efforts transversaux. Elle prend en compte également la charge verticale car elle est déterminée en fonction de celle-ci. Cela permet de globaliser la rigidité de dérive équivalente sous une charge verticale donnée.

Il a été constaté que ce comportement dynamique latéral est principalement induit par plusieurs grandeurs physiques parmi lesquelles l'empattement du véhicule, la distribution de masse du véhicule, c'est-à-dire le ratio entre la masse au niveau du train avant et la masse totale, la distribution d'inertie, c'est-à-dire le ratio entre l'inertie équivalente des masses ponctuelles vues aux trains et l'inertie en lacet, et les dérives spécifiques des trains roulants, c'est-à-dire les prises d'angle de dérive des trains sous accélération transversale.

L'invention est définie selon les termes de la revendication indépendante 1.

Les inventeurs ont notamment identifié le rôle fondamental joué par les dérives spécifiques des trains dans le comportement dynamique latéral du véhicule, en notant qu'elles caractérisent les performances de guidage des trains roulants qui influent directement sur la vivacité de la réponse et la stabilité latérale du véhicule. L'évolution de ces dérives spécifiques est notamment mesurée par une évaluation d'un gradient de sous-virage du véhicule, qui rend compte du surplus d'angle volant à ajouter pour que le véhicule suive une trajectoire à vitesse donnée. Chaque dérive spécifique tient compte implicitement de la masse au train et donc de la répartition du chargement entre avant et arrière du véhicule.

Aucune expression de dérive spécifique n'est explicitée avec le modèle bicyclette classiquement utilisé, notamment du fait que la dérive spécifique des trains roulants est une notion propre à la mise au point du châssis plutôt qu'à celle de la modélisation physique et scientifique. En ce sens, les inventeurs estiment que la notion de dérive spécifique est fondamentale pour le calage de la réponse dynamique du châssis et proposent le paramétrage d'une unité de contrôle, dans un dispositif de contrôle de direction d'un véhicule, avec une modélisation tenant compte de cette dérive spécifique. Les dérives spécifiques permettent de construire un modèle en mesurant simplement l'accélération transversale et les charges verticales sur chacun des trains, contrairement à la notion d'angle de dérive, ou il est nécessaire de mesurer les pneus, les épures et les caractéristiques élasto-cinématiques (ou bushings en anglais).

Plus particulièrement, la modélisation mise en œuvre permet de lier des grandeurs systèmes, comme par exemple le temps de réponse, la bande passante ou le comportement statico dynamique, aux dérives spécifiques qui représentent davantage la qualité de guidage transversal d'un train roulant, et la qualité de réponse de la dynamique latérale d'un châssis.

Selon une caractéristique optionnelle de l'invention, on peut prévoir que le modèle de comportement dynamique latéral du châssis implémenté dans le module de calcul est configuré de sorte qu'au moins la vitesse de lacet est exprimée en fonction des dérives spécifiques de chacun des trains de roues avant et arrière du véhicule.

Le cas échéant, la dérive au centre de gravité du véhicule et l'accélération latérale du véhicule sont également exprimées en fonction des dérives spécifiques de chacun des trains de roues avant et arrière du véhicule.

De la sorte, on peut exprimer chacune des grandeurs physiques spécifiques du comportement dynamique latéral en fonction des dérives spécifiques de chaque train roulant, la vitesse de lacet étant plus spécifiquement modélisée afin de permettre par la suite le calcul d'un moment de lacet de référence et d'un moment de lacet effectif.

Selon une caractéristique optionnelle de l'invention, le modèle de comportement dynamique latéral du châssis est configuré pour exprimer une fonction de transfert entre ladite vitesse de lacet et le système de braquage du train de roues avant, ou le braquage du train de roues arrière, ou un moment de lacet exercé par le ou les actionneurs associé au système de freinage découplé, en fonction d'un gain statico-dynamique défini en fonction des dérives spécifiques des trains de roues avant et arrière du véhicule.

Dans ce contexte, l'unité de contrôle peut notamment être configurée pour émettre une instruction de commande prioritaire dirigée vers le ou les actionneurs pilotés associés au système de braquage, avant d'émettre le cas échéant une instruction de commande dirigée vers le ou les actionneurs pilotés associés au système de freinage découplé.

L'expression des fonctions de transfert en fonction des dérives spécifiques, telle que l'autorise le modèle de comportement dynamique latéral qui est présenté, permet notamment de montrer que la décélération longitudinale à exercer sur les roues du véhicule est trop importante pour obtenir un gain équivalent à celui obtenu par le braquage maximal autorisé par la structure mécanique du train de roues.

Selon une caractéristique optionnelle de l'invention, le gain statico-dynamique relatif à chacun des systèmes de braquage des trains de roue avant et arrière peut être fonction d'un gradient de sous-virage, c'est-à-dire une différence entre la dérive spécifique du train avant et la dérive spécifique du train arrière.

En particulier, c'est l'écart entre les dérives spécifiques avant et arrière qui détermine la vivacité latérale du véhicule. Cet écart est appelé gradient de sous-virage et rend compte, tel que cela a été évoqué précédemment, du surplus d'angle volant à ajouter pour que le véhicule suive une trajectoire à vitesse donnée.

Dans ce contexte, l'unité de contrôle est configurée pour émettre une instruction de commande prioritaire dirigée vers le ou les actionneurs pilotés associés au système de braquage du train de roues arrière, avant d'émettre le cas échéant une instruction de commande dirigée vers le ou les actionneurs pilotés associés au système de braquage du train de roues avant.

L'expression des fonctions de transfert en fonction des dérives spécifiques, telle que l'autorise le modèle de comportement dynamique latéral qui est présenté, permet notamment de montrer que, d'un point de vue dynamique, la rapidité de réponse est incontestablement à l'avantage d'une entrée de braquage des roues du train arrière, c'est-à-dire à l'avantage d'un pilotage de la direction en jouant d'abord sur le braquage du train de roues arrière puis le braquage du train de roues avant.

En d'autres termes, si un véhicule est équipé d'au moins un actionneur piloté configuré pour réaliser un freinage découplé d'une roue du véhicule, un actionneur piloté configuré pour réaliser un braquage d'une roue arrière du véhicule et un actionneur piloté configuré pour réaliser un braquage d'une roue avant du véhicule, une instruction de commande, par exemple pour une action corrective, générée par l'unité de contrôle consiste dans un premier temps en une instruction de commande destinée à l'actionneur de l'angle de braquage d'une roue arrière du véhicule.

Selon une caractéristique optionnelle de l'invention, on peut prévoir que l'unité de contrôle est configurée pour recevoir des paramètres d'entrée et des paramètres dynamiques de roulage et que l'unité de contrôle est configurée pour dans un premier temps comparer une donnée de référence, calculée par application du modèle de comportement dynamique latéral du châssis à partir de valeurs des paramètres d'entrée et de valeurs de référence des paramètres dynamiques de roulage, à une donnée effective, calculée par application du modèle de comportement dynamique latéral du châssis à partir de valeurs des mêmes paramètres d'entrée et de valeurs effectives des paramètres dynamiques de roulage, et pour dans un deuxième temps générer des instructions d'action corrective en cas d'écart significatif entre la donnée de référence et la donnée effective.

Les valeurs effectives des paramètres dynamiques de roulage peuvent résulter de mesures réalisées en temps réel lors du roulage du véhicule, par l'intermédiaire de capteurs appropriés, ou bien peuvent résulter de données de tests implémentées par un opérateur lors d'une mise au point du châssis.

Selon une caractéristique optionnelle de l'invention, on peut prévoir que la donnée de référence est un moment de lacet de référence et la donnée effective est un moment de lacet effectif, l'unité de contrôle étant configurée pour calculer d'une part ledit moment de lacet de référence en utilisant le modèle de comportement dynamique latéral du châssis avec les valeurs de référence et pour calculer d'autre part ledit moment de lacet effectif en utilisant le modèle de comportement dynamique latéral du châssis avec les valeurs effectives.

Là encore, la vitesse du véhicule peut être récupérée par l'unité de contrôle auprès d'un capteur de vitesse embarqué sur le véhicule ou à la suite d'une donnée de test implémentée par un opérateur.

Selon une caractéristique optionnelle de l'invention, on peut prévoir que l'unité de contrôle est configurée pour calculer simultanément le moment de lacet de référence et le moment de lacet effectif.

La dérive spécifique arrière détermine également la constante de temps de réaction entre le train avant et le train arrière lorsqu'on inscrit le véhicule en virage. Plus elle est importante et plus le temps de réponse entre les efforts du train arrière et ceux du train avant sera important. Un véhicule bien calé est un véhicule dont la réponse du train arrière est rapide par rapport au train avant. Ce calage doit permettre d'avoir un transitoire non perceptible par le conducteur, notamment lors de changement d'appui. La mise en œuvre du dispositif selon l'invention, avec le modèle de comportement du châssis tenant compte des dérives spécifiques permet d'optimiser cette prestation. Dans ce cadre, le dispositif peut permettre d'assurer le contrôle du moment en lacet, qui peut être généré par l'un des systèmes pilotés que sont le système à quatre roues directrices, avec des actionneurs pilotés permettant de gérer distinctement le braquage de chaque roue, et le système de freinage découplé, avec des actionneurs pilotés permettant de gérer distinctement les actions de freinage sur chacune des roues.

Selon une caractéristique optionnelle de l'invention, on peut prévoir que l'au moins un actionneur piloté est un actionneur de l'angle de braquage d'une roue arrière du véhicule, l'angle de braquage de cette roue arrière étant déterminé pour un angle de train avant du châssis déterminé et pour une égalité du moment de lacet de référence calculé avec le moment de lacet effectif calculé.

Selon une caractéristique optionnelle de l'invention, on peut prévoir que l'au moins un actionneur piloté est un actionneur de freinage découplé d'une roue du véhicule, un moment de lacet généré par le freinage de cette roue étant déterminé pour un angle de train avant du châssis déterminé et pour une égalité du moment de lacet de référence calculé avec le moment de lacet effectif calculé.

Selon une caractéristique optionnelle de l'invention, on peut prévoir que les paramètres d'entrée consistent au moins en la dérive spécifique du train avant et la dérive spécifique du train arrière.

Selon une caractéristique optionnelle de l'invention, on peut prévoir que la dérive spécifique du train avant présente une valeur de référence comprise entre 0,3 et 1 deg/(m/s$^2$).

Selon une caractéristique optionnelle de l'invention, on peut prévoir que la dérive spécifique du train arrière présente une valeur de référence comprise entre 0,1 et 0,6 deg/(m/s$^2$).

Il convient de noter que les dérives spécifiques prennent en compte implicitement les phénomènes d'épures et d'élasto-cinématiques des trains. Dès lors, il est inutile d'estimer les rigidités de dérive des trains, et considérer les dérives spécifiques sous forme d'une plage de valeurs permet d'englober les incertitudes, et par exemple les variations de charge verticale du pneumatique induites par les variations d'accélérations longitudinale et latérale.

Selon une caractéristique optionnelle de l'invention, on peut prévoir que la dérive spécifique du train arrière est fixée et déterminée en fonction d'un type de conduite identifiée par l'unité de contrôle.

Selon la vitesse du véhicule et le type de comportement de conduite souhaité, par exemple un comportement sportif ou un comportement économique, l'invention prévoit de modifier la valeur de référence de la dérive spécifique du train arrière. Dans ce contexte, l'unité de contrôle peut comporter une table de données dans laquelle une valeur de dérive spécifique est associée à une valeur de vitesse. Le calcul de la donnée de référence, par exemple le moment de lacet de référence, en est modifié et l'instruction de commande, par exemple l'angle de braquage du train de roues arrière, qui est fonction de la comparaison de cette donnée de référence avec la donnée effective correspondante en est modifiée.

Selon une caractéristique optionnelle de l'invention, on peut prévoir que les paramètres d'entrée consistent au moins en la distribution de masse et la distribution d'inertie du véhicule.

Il est ainsi notable que le modèle de comportement dynamique latéral selon l'invention considère en premier lieu des paramètres dynamiques du véhicule tels que ces distributions, les paramètres statiques que sont la masse et l'inertie du véhicule n'étant pas considérés en tant que paramètre de référence mais le cas échéant à travers des calculs de gains pris en compte lors du paramétrage dynamique du véhicule.

Selon une caractéristique optionnelle de l'invention, on peut prévoir que les paramètres d'entrée consistent par ailleurs en la masse du véhicule ainsi que l'empattement du véhicule, et un coefficient de démultiplication de direction.

Selon une caractéristique optionnelle de l'invention, on peut prévoir que le modèle de comportement dynamique latéral du châssis est écrit autour d'une décomposition modale de la relation entre lacet et dérive du véhicule, au moins une décomposition étant associée à un actionneur d'angle de braquage du train de roues avant et au moins une autre décomposition étant associée à un actionneur d'angle de braquage du train de roues arrière ou à un actionneur piloté d'un système de freinage découplé.

Selon une caractéristique optionnelle de l'invention, on peut prévoir que le modèle de comportement dynamique latéral du châssis est configuré pour exprimer la vitesse de lacet en fonction de chacune desdites décompositions.

Selon une caractéristique optionnelle de l'invention, on peut prévoir que les valeurs récupérées par l'unité de contrôle consistent en la vitesse du véhicule, l'angle de braquage du train de roues avant et l'angle de braquage du train de roues arrière. Selon une caractéristique optionnelle de l'invention, on peut prévoir que l'unité de contrôle est configurée pour communiquer avec une pluralité de capteurs aptes à mesurer lors du roulage du véhicule les valeurs récupérées par la suite par l'unité de contrôle.

L'invention concerne également un procédé de contrôle de direction d'un véhicule équipé d'un dispositif de contrôle décrit en précédence, au cours duquel on réalise dans un premier temps une étape de calcul où le module calcule d'une part un moment de rotation en lacet effectif et un moment de rotation en lacet de référence, puis une étape de comparaison où le module de calcul égalise les deux moments de rotation en lacet calculé pour en déduire ultérieurement, dans une étape de déduction, au moins une valeur que doivent respecter l'angle arrière et/ou le moment en lacet de freinage en fonction de l'angle de braquage du train de roues avant.

L'invention sera mieux comprise à la lecture de la description qui suit et à l'examen des figures qui l'accompagnent. Ces figures ne sont données qu'à titre illustratif, en étant nullement limitatif de l'invention :

[Fig 1] est une représentation schématique d'un véhicule et d'un dispositif de contrôle de direction selon l'invention apte à équiper un tel véhicule, dans laquelle a été notamment illustrée schématiquement, à une échelle rendant visible ses composants, une unité de contrôle formant partie du dispositif de contrôle ;

[Fig 2] est une représentation schématique d'une roue d'un véhicule en cours de virage permettant d'illustrer la notion de dérive spécifique du train ;

[Fig 3] est un logigramme représentant un mode de fonctionnement de l'unité de contrôle illustrée schématiquement sur la figure 1.

Pour rappel, l'invention consiste en un dispositif de contrôle de direction d'un véhicule automobile apte à générer des instructions de commande à des actionneurs pilotés par l'intermédiaire d'un module de calcul dans lequel est implémenté un modèle de comportement dynamique latéral du châssis du véhicule qui tient notamment compte des dérives spécifiques de chaque train de roues avant et arrière du véhicule.

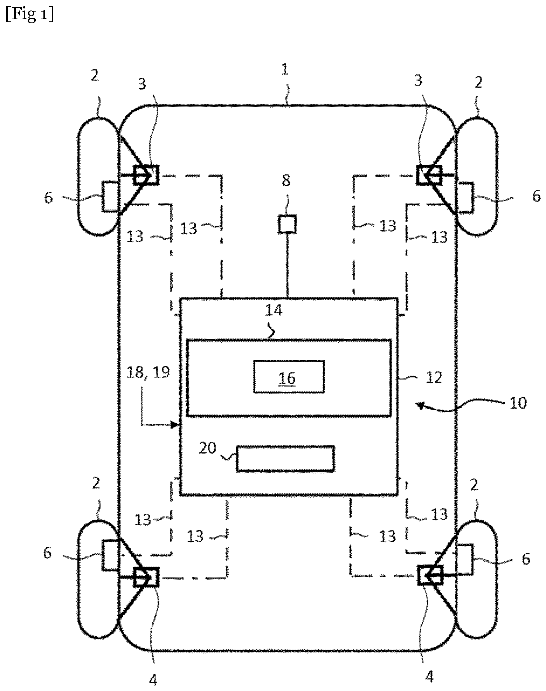

Le véhicule 1 illustré sur la figure 1 comporte notamment un dispositif de contrôle de direction 10, dont la fonction est d'agir sur la direction du véhicule, et par exemple par le maintien du véhicule dans une trajectoire ciblée lors d'un virage à plus ou moins grande vitesse, par une action de braquage sur l'un ou l'autre des trains de roues 2 du véhicule 1.

Le dispositif de contrôle de direction 10 comporte plus particulièrement une unité de contrôle 12 qui est configurée pour émettre des instructions de commande 13 en direction d'actionneur(s) piloté(s) respectivement associé à l'une des roues 2.

Dans l'exemple illustré sur la figure 1, les actionneurs pilotés consistent plus particulièrement en des premiers actionneur pilotés 3 associés à un système de braquage d'un train de roue avant, en des deuxièmes actionneurs 4 associés à un système de braquage d'un train de roue arrière, le véhicule comportant un système à quatre roues directrices.

Ces actionneurs pilotés consistent également en des troisièmes actionneurs pilotés 6 associés à un système de freinage découplé, chaque troisième actionneur piloté 6 étant associé à l'une des roues 2 du véhicule pour générer, en cas de demande de freinage découplé, un moment en lacet spécifique à chaque roue, ou à tout le moins à chaque train de roues, avant ou arrière.

Le véhicule comporte également au moins un capteur 8, qui peut notamment prendre ici la forme d'un capteur de vitesse disposé au niveau d'une des roues. D'autres capteurs 8 peuvent être prévus pour rendre compte de la variation de paramètres dynamiques lors du roulage du véhicule.

On va maintenant décrire plus en détails le dispositif de contrôle de direction 10 et notamment l'unité de contrôle 12.

L'unité de contrôle comporte notamment un module de calcul 14 dans lequel est implémenté un modèle de comportement dynamique latéral du châssis 16 qui, tel que cela a été précisé précédemment, exprime les grandeurs physiques propres à la dynamique latérale du châssis en fonction des dérives spécifiques $\delta s_1$ et $\delta s_2$ de chaque train de roues, une dérive spécifique étant associé à un train de roues.

L'unité de contrôle 12 est configurée pour récupérer des paramètres d'entrée 18 destinés à être chargés dans le module de calcul 14, ainsi que des paramètres dynamiques de roulage 19, qui forment des valeurs caractéristiques du roulage du véhicule. Cette unité de contrôle 12 est configurée pour faire fonctionner le module de calcul 14 en appliquant le modèle de comportement dynamique latéral du châssis 16 avec ces différents paramètres 18, 19, et pour générer en fonction des instructions de commande 13 en direction de l'un et/ou l'autre des différents actionneurs pilotés 3,4, 6.

Les paramètres d'entrée 18 comportent tout particulièrement au moins une dérive spécifique d'un train roulant du véhicule, et plus particulièrement à la fois la dérive spécifique du train avant $\delta s_1$ et la dérive spécifique du train arrière $\delta s_2$. Les paramètres peuvent en outre comporter la distribution de masse $\alpha$, pouvant consister en un ratio de la masse du train avant sur la masse du véhicule et la distribution d'inertie $\lambda$, par exemple sous la forme d'un ratio d'inertie, du véhicule, ainsi que la masse M du véhicule, l'empattement L du véhicule, et un coefficient de démultiplication de direction $\eta$.

La masse M du véhicule ici considérée en tant que paramètre d'entrée 18 est la masse à vide du véhicule, ce qui permet, outre le fait d'avoir une valeur fixe implémentée dans l'unité de contrôle, de s'assurer que l'action corrective qui va avoir lieu sur l'un ou l'autre des trains ne risque pas de bloquer les roues.

Chaque paramètre d'entrée 18 est implémenté dans le module de calcul avec une valeur déterminée notamment lors de la conception du véhicule et/ou lors de la mise au point du véhicule.

A titre d'exemple non limitatif, la dérive spécifique du train avant $\delta s_1$ présente une valeur comprise entre 0,3 et 1 deg/(m/s$^2$). La dérive spécifique du train arrière $\delta s_2$ peut présenter une valeur comprise entre 0,1 et 0,6 deg/(m/s$^2$).

La valeur de la dérive spécifique du train arrière $\delta s_2$ peut être modifiée en fonction d'une vitesse V du véhicule et d'un type de comportement souhaité. A cet effet, l'unité de contrôle peut comporter une mémoire de stockage 20 dans laquelle est stockée une table de valeurs associant une vitesse, ou un comportement de conduite parmi lesquels par exemple une conduite économique ou une conduite sport, à une valeur de la dérive spécifique du train arrière $\delta s_2$. Plus particulièrement, si l'on souhaite avoir de bonnes performances de guidage latérales à vitesses élevées, et donc un comportement dynamique latéral le plus économique, et le plus sécuritaire, possible, il convient de prévoir d'abaisser la valeur de dérive spécifique du train arrière.

Les paramètres dynamiques de roulage 19 sont récupérés par l'unité de contrôle 12 et peuvent consister notamment en la vitesse du véhicule, l'angle de braquage du train de roues avant et l'angle de braquage du train de roues arrière. Le module de calcul 14, via le modèle de comportement dynamique latéral du châssis 16, est apte à définir si une valeur effective d'un paramètre dynamique de roulage implique une variation de la donnée calculée et doit générer une action corrective sur le châssis via les actionneurs pilotés.

Le modèle de comportement de dynamique latéral 16 peut être mis en œuvre aussi bien lors d'un processus de mise au point, les valeurs de référence et effectives des différents paramètres 18,19 étant rentrées dans l'unité de contrôle 12 par un opérateur, afin de tester le fonctionnement du châssis lorsqu'un écart donné entre une donnée de référence calculée sur la base des valeurs de référence et une donnée effective calculée sur la base des valeurs effectives est constaté, que lors d'un roulage du véhicule, pour réaliser des actions correctives sur la direction en temps réel.

Dans ce dernier cas, le dispositif de contrôle 10 est configuré pour communiquer avec une pluralité de capteurs, et par exemple le capteur 8 configuré pour déterminer la vitesse du véhicule, que ce soit aussi bien la vitesse longitudinale du véhicule que sa vitesse latérale.

Ces capteurs 8 sont configurés pour mesurer différents paramètres dynamiques lors du roulage du véhicule, et il convient de noter que ces capteurs peuvent être, sans sortir du contexte de l'invention, spécifiquement dédiés au fonctionnement du dispositif de contrôle de direction ou être utilisés par ailleurs pour d'autres fonctions implémentées sur le véhicule, dès lors que l'unité de contrôle du dispositif de contrôle selon l'invention est apte à récupérer ces données à la demande ou de façon continue.

L'unité de contrôle est configurée pour dans un premier temps comparer une donnée de référence, calculée par application du modèle de comportement dynamique latéral du châssis 16 à partir de valeurs des paramètres d'entrée 18 et de valeurs de référence des paramètres dynamiques de roulage 19, à une donnée effective, calculée par application du même modèle 16 à partir des valeurs des mêmes paramètres d'entrée 18 et de valeurs effectives des paramètres dynamiques de roulage 19, mesurées en temps réel sur le véhicule. L'unité de contrôle est par ailleurs configurée pour dans un deuxième temps générer des instructions d'action corrective en cas d'écart significatif entre la donnée de référence et la donnée effective.

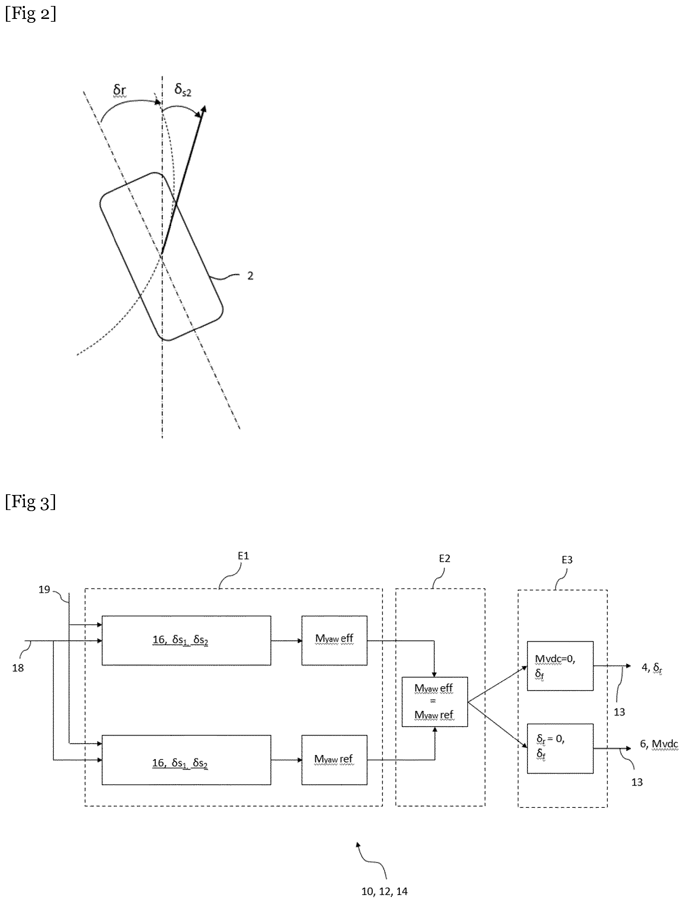

On va maintenant décrire plus en détails le modèle de comportement dynamique latéral du châssis 16 et la façon dont ce modèle exprime les grandeurs physiques propres à la dynamique latérale en fonction des dérives spécifiques des trains roulants telles qu'elles sont illustrées, à titre d'exemple pour une roue arrière, sur la figure 2.

Le modèle de comportement dynamique latéral du châssis 16 est notamment écrit autour d'une décomposition modale du mode couplet lacet-dérive.

Chaque décomposition est associée à chaque actionneur capable de générer un moment en lacet, c'est à dire à chacun des actionneurs pilotés précédemment décrits et plus particulièrement l'actionneur d'angle de braquage des roues avant 3, l'actionneur d'angle de braquage des roues arrière 4 et l'actionneur de freinage découplé 6.

La première décomposition modale, relative aux premiers actionneurs pilotés 3 associés à un système de braquage d'un train de roue avant, est la suivante :

$$(1) \quad \tau_\psi^2 s^2 Vm1 + 2\xi_\psi \tau_\psi s Vm1 + Vm1 = G0\,\delta_f$$

La deuxième décomposition modale, relative aux deuxièmes actionneurs 4 associés à un système de braquage d'un train de roue arrière, est la suivante :

$$(2) \quad \tau_\psi^2 s^2 Vm2 + 2\xi_\psi \tau_\psi s Vm2 + Vm2 = -G0\,\delta_r$$

La troisième décomposition modale, relative aux troisièmes actionneurs pilotés 6 associés à un système de freinage découplé, est la suivante :

$$(3) \quad \tau_\psi^2 s^2 Vm3 + 2\xi_\psi \tau_\psi s Vm3 + Vm3 = \left( \frac{\delta_{s1}}{LM\alpha} - \frac{\delta_{s2}}{LM(-1+\alpha)} \right) G0\, M_{vdc}$$

Pour chacune de ces décompositions modales, on a :

$\delta_f$ : Angle de braquage des roues du train roulant avant, en rad ;

$\delta_r$ : Angle de braquage des roues du train roulant arrière, en rad ;

$M_{vdc}$ : Moment de rotation en lacet du système de freinage, en Nm ;

L : Empattement, en m ;

Vm = Vm1 + Vm2 + Vm3 : Vecteur modal du mode couplet lacet / dérive ;

a : Distribution de masse, s.u ;

Go : Gain en lacet, en sec$^{-1}$ ;

$\delta_{s1}$ : Dérive spécifique avant, en rad/(m/s$^2$) ;

$\delta_{s2}$ : Dérive spécifique arrière, en rad/(m/s$^2$) ;

$\tau_\psi$ : Constante de temps du mode couplé lacet/dérive, en sec ;

$\xi_\psi$ : Amortissement du mode couplé lacet/dérive, s.u.

Avec une telle décomposition, les grandeurs physiques que sont la vitesse de lacet, l'accélération latérale, et l'angle de dérive peuvent être exprimées comme une combinaison linéaire des composantes du vecteur modal.

La vitesse de lacet s'exprime alors par :

$$(4) \quad vpsi = \left(1 + \tau_2 s\right) Vm1 + \left(1 + \tau_1 s\right) Vm2 + \left(1 + s\,\tau_{vdc}\right) Vm3$$

Par ailleurs, la dérive au centre de gravité s'exprime par :

$$(5) \qquad \beta = \frac{\left(\alpha L - \delta_{s2}\, V^2\right)\left(1 + s\,\tau_{\beta I}\right) Vm1}{V} + \frac{\left(\alpha L - \delta_{s1}\, V^2 - L\right)\left(1 + s\,\tau_{\beta 2}\right) Vm2}{V}$$

et l'accélération latérale s'exprime par une combinaison linéaire des deux variables précédentes soit

$$(6) \qquad lat_G = V\,vpsi + V\,s\,\beta$$

Tous les paramètres sont ici exprimés en fonction des dérives spécifiques.

Une constante de temps $\tau_\psi$ du mode couplé lacet/dérive s'écrit ainsi :

$$(7) \qquad \tau_\psi := \frac{1}{\sqrt{\dfrac{\lambda}{L}}\ \sqrt{\dfrac{1}{\delta_{s2}} - \dfrac{1}{\delta_{s1}}}\ \sqrt{1 + \dfrac{L}{\left(\delta_{s1} - \delta_{s2}\right) V^2}}}$$

Un amortissement réduit $\xi_\psi$ du mode couplé lacet/dérive s'écrit ainsi :

$$(8) \qquad \xi_\psi := \frac{1}{2}\ \frac{\dfrac{\alpha + \lambda\left(1 - \alpha\right)}{\delta_{s1}} + \dfrac{\lambda\alpha + 1 - \alpha}{\delta_{s2}}}{\sqrt{\dfrac{L}{\delta_{s1} - \delta_{s2}}}\ \sqrt{\dfrac{\lambda}{L}}\ \sqrt{\dfrac{1}{\delta_{s2}} - \dfrac{1}{\delta_{s1}}}\ \sqrt{1 + \dfrac{V^2\left(\delta_{s1} - \delta_{s2}\right)}{L}}}$$

Un gain en lacet Go s'écrit ainsi :

$$(9) \qquad G0 := \frac{V}{L + \left(\delta_{s1} - \delta_{s2}\right) V^2}$$

Par ailleurs, les zéros de transmission correspondant présentent les formes suivantes, là encore exprimés en fonction de l'une et/ou l'autre des dérives spécifiques $\delta_{s1}$, $\delta_{s2}$.

Le zéro de transmission en vitesse de lacet par rapport à une commande de braquage des roues du train arrière s'écrit :

$$(10) \qquad \tau_1 = V\delta s_1$$

Le zéro de transmission en vitesse de lacet par rapport à une commande de braquage des roues du train avant s'écrit

$$(11) \qquad \tau_2 = V\delta s_2$$

Le zéro de transmission en angle de dérive par rapport à une commande de braquage des roues du train arrière s'écrit

$$(12) \qquad \tau_{\beta 1} = \frac{V\,\delta s_2\, L\alpha}{\left(\alpha L - \delta s_2\, V^2\right)\lambda}$$

Le zéro de transmission en angle de dérive par rapport à une commande de braquage des roues du train avant s'écrit

$$(13) \qquad \tau_{\beta2} = \frac{(-1+\alpha)\,\delta s_{1ref}\,VL}{(\alpha\,L - \delta s_{1ref}\,V^2 - L)\,\lambda}$$

Le zéro de transmission en vitesse de lacet par rapport à un moment en lacet généré par le système de freinage s'écrit

$$(14) \qquad \tau_{vdc} = \frac{V\,\delta s_2\,\delta s_1}{(1-\alpha)\,\delta s_1 + \delta s_2\,\alpha}$$

Il est alors possible d'exprimer les fonctions de transferts habituellement utilisées dans le cadre de la dynamique automobile, à savoir la vitesse de lacet, l'accélération latérale et les efforts latéraux, en fonction des dérives spécifiques, ce qui permet par suite de quantifier la dynamique transitoire latérale du véhicule.

Le modèle de comportement dynamique latéral du châssis 16, implémenté dans l'unité de contrôle 12, est notamment configuré pour exprimer la vitesse de lacet en fonction de chacune des décompositions modales de la relation entre lacet et dérive du véhicule, et on va désormais décrire des calculs considérant plus particulièrement cette vitesse de lacet et notamment l'expression de la fonction de transfert en vitesse de lacet.

La fonction de transfert entre la vitesse de lacet le braquage des roues avant peut se lire comme suit :

$$(15) \qquad \frac{\left(1 + \tau_2\,s\right)\,G0}{\tau_\psi^2\,s^2 + 2\,\xi_\psi\,\tau_\psi\,s + 1}$$

La fonction de transfert entre la vitesse de lacet et le braquage des roues arrière peut se lire comme suit :

$$(16) \qquad -\frac{\left(1 + \tau_1\,s\right)\,G0}{\tau_\psi^2\,s^2 + 2\,\xi_\psi\,\tau_\psi\,s + 1}$$

La fonction de transfert entre la vitesse de lacet et un moment de lacet exercé par le système de freinage peut se lire comme suit :

$$(17) \qquad \frac{G0\left(\left(-1+\alpha\right)\,\delta_{s1} - \delta_{s2}\,\alpha\right)\left(1 + s\,\tau_{vdc}\right)}{LM\alpha\left(\tau_\psi^2\,s^2 + 2\,\xi_\psi\,\tau_\psi\,s + 1\right)\left(-1+\alpha\right)}$$

Le modèle de comportement dynamique latéral du châssis 16 est ainsi configuré pour exprimer une fonction de transfert entre la vitesse de lacet et chacun des systèmes associés à un actionneur piloté, en fonction d'un gain statico-dynamique défini en fonction des dérives spécifiques des trains de roues avant et arrière du véhicule.

On va maintenant décrire les actions de calcul réalisées par l'unité de contrôle 12, et plus particulièrement par le module de calcul 14, en considérant les différentes expressions du modèle de comportement dynamique latéral telles qu'elles viennent d'être décrites précédemment.

Tel que cela a pu être précisé précédemment, le module de calcul 14 est configuré pour permettre un contrôle du comportement du châssis en calculant une donnée, et plus particulièrement ici un moment de rotation en lacet, aussi bien pour des valeurs de référence que pour des valeurs effectives de différents paramètres utilisés pour calculer cette donnée, que ces valeurs effectives soient introduites par un opérateur ou bien récupérées en temps réel lors du roulage du véhicule par le dispositif de contrôle.

Le moment de rotation en lacet du véhicule est donné par le produit entre l'inertie de lacet et l'accélération en lacet, selon l'équation suivante :

$$(18) \qquad M_{yaw} = I_{zz}\,s^2\psi$$

Le module de calcul 14 tient compte du modèle de comportement dynamique latéral du châssis 16 et de la formulation des fonctions de transfert qui ont été évoquées précédemment aux équations (15), (16) et (17), et calcule un moment de lacet sur la base des dérives spécifiques en utilisant l'équation suivante :

$$(19) \quad M_{yaw} = \frac{Izz\, s\left(1+\tau_2\, s\right)G0\,\delta_f}{\tau_\psi^2 s^2 + 2\xi_\psi\,\tau_\psi\, s + 1} - \frac{Izz\, s\left(1+\tau_1\, s\right)G0\,\delta_r}{\tau_\psi^2 s^2 + 2\xi_\psi\,\tau_\psi\, s + 1} + \frac{G0\left(-\delta_{s1}+\delta_{s1}\,\alpha-\delta_{s2}\,\alpha\right)\left(1+s\,\tau_{vdc}\right)M_{vdc}}{\left(\tau_\psi^2 s^2 + 2\xi_\psi\,\tau_\psi\, s + 1\right)\alpha\, ML\left(-1+\alpha\right)}$$

Simultanément, le module de calcul 14 calcule une référence pour ce moment de rotation en lacet, qui s'écrit de la sorte :

$$(20) \quad M_{yaw} = I_{zz}\, s^2 \psi_{ref}$$

La vitesse de lacet de référence ne doit être fonction que de l'angle volant, c'est-à-dire ici que du braquage des roues avant, puisqu'on émet l'hypothèse qu'elle est donnée par un véhicule de référence qui n'a que deux roues directrices, ou bien en d'autres termes puisqu'on émet l'hypothèse que la vitesse de lacet de référence ne résulte que de l'angle volant appliqué par le conducteur.

La vitesse de lacet de référence peut dès lors être exprimée de la façon suivante, en ne tenant compte que de la fonction de transfert évoquée à l'équation (15) :

$$(21) \quad s\,\psi_{ref} = \frac{G0_{ref}\left(1+\tau_{2\,ref}\, s\right)s\,\delta_f}{1 + 2\zeta_{\psi_{ref}}\,\tau_{\psi_{ref}}\, s + s^2\,\tau_{\psi_{ref}}^2}$$

Le moment de lacet en référence s'exprime donc comme suit, en fonction des deux équations précédentes :

$$(22) \quad M_{yaw} = I_{zz}\, s\, \frac{G0_{ref}\left(1+\tau_{2ref}\, s\right)s}{1 + 2\xi_{\psi_{ref}}\,\tau_{\psi ref}\, s + s^2\tau^2_{\psi ref}}\,\delta_f$$

Le module de calcul 14, via le modèle de comportement dynamique latéral du châssis 16, est configuré de manière à réaliser dans un premier temps une étape de calcul E1, tel que visible sur la figure 3.

Au cours de l'étape de calcul E1, le module calcule d'une part le moment de rotation en lacet effectif $M_{yaw\,eff}$, c'est-à-dire le calcul du moment en lacet exprimé à l'équation (19) avec les valeurs des paramètres d'entrée 18 et les valeurs effectives des paramètres dynamiques de roulage 19, et d'autre part le calcul du moment de rotation en lacet de référence $M_{yaw\,ref}$, c'est-à-dire le calcul du moment en lacet exprimé à l'équation (22) avec les valeurs des paramètres d'entrée 18 et les valeurs de référence des paramètres dynamiques de roulage 19.

L'unité de contrôle 12 est paramétrée de sorte que le module de calcul puisse réaliser le calcul simultané du moment de rotation en lacet de référence et le moment de rotation en lacet effectif.

Dans un deuxième temps, et tel qu'illustré sur la figure 3 au cours d'une étape de comparaison E2, le module de calcule égalise le moment en lacet effectif et le moment en lacet de référence, selon l'équation suivante :

$$(23) \quad \frac{G0_{ref}\left(1+\tau_{2\,ref}\, s\right)\delta_f}{1 + 2\zeta_{\psi_{ref}}\,\tau_{\psi_{ref}}\, s + s^2\,\tau_{\psi_{ref}}^2} = \frac{\left(1+\tau_2\, s\right)G0\,\delta_f}{\tau_\psi^2 s^2 + 2\xi_\psi\,\tau_\psi\, s + 1} - \frac{\left(1+\tau_1\, s\right)G0\,\delta_r}{\tau_\psi^2 s^2 + 2\xi_\psi\,\tau_\psi\, s + 1} + \frac{G0\left(-\delta_{s1}+\delta_{s1}\,\alpha-\delta_{s2}\,\alpha\right)\left(1+s\,\tau_{vdc}\right)M_{vdc}}{\left(\tau_\psi^2 s^2 + 2\xi_\psi\,\tau_\psi\, s + 1\right)\alpha\, ML\left(-1+\alpha\right)}$$

Puis dans un troisième temps, et tel qu'illustré sur la figure 3 au cours d'une étape de déduction E3, le module de calcul déduit de la relation d'égalité (23) les valeurs que doivent respecter l'angle arrière et/ou le moment en lacet de freinage en fonction de l'angle de braquage du train de roues avant.

Dans le cas où le véhicule dispose d'un système quatre roues directrices, sans système de freinage découplé, le module de calcul impose dans l'équation (23) un moment en lacet du système de freinage égal à zéro (Mvdc=0) et on obtient donc une relation directe donnant l'angle de braquage du train de roues arrière en fonction de l'angle de braquage du train de roues avant qui s'écrit de la sorte :

$$(24) \qquad \delta_r = -\frac{G0_{ref}\left(1 + \tau_{2\,ref}s\right)\delta_f\left(\tau_\psi^2 s^2 + 2\,\xi_\psi\,\tau_\psi\,s + 1\right)}{\left(1 + 2\,\zeta_{\psi_{ref}}\,\tau_{\psi_{ref}}\,s + s^2\,\tau_{\psi_{ref}}^2\right)\left(1 + \tau_1\,s\right)G0} + \frac{\left(1 + \tau_2\,s\right)\delta_f}{1 + \tau_1\,s}$$

Dans ce contexte, on choisit de piloter l'angle de braquage du train de roues arrière de manière unique en fonction de l'angle de braquage du train de roues avant. En d'autres termes, l'angle de braquage d'une roue arrière, ou du train de roues arrière, est déterminé pour un angle de braquage déterminé du train de roues avant et pour une égalité du moment en lacet de référence calculé avec le moment en lacet effectif calculé.

De manière complémentaire, et notamment en fonction d'analyse effectuée par les inventeurs basée sur le modèle de comportement dynamique latérale du châssis, et décrite ci-après, l'unité de contrôle est configurée pour émettre une instruction de commande prioritaire dirigée vers le ou les actionneurs pilotés associés au système de braquage du train de roues arrière, avant d'émettre le cas échéant une instruction de commande dirigée vers le ou les actionneurs pilotés associés au système de braquage du train de roues avant.

Dans le cas où le véhicule dispose d'un système de freinage découplé, sans système quatre roues directrices, on choisit de piloter le moment en lacet généré par le système de freinage en fonction de l'angle de braquage du train de roues avant et l'équation (23) s'écrit de la sorte :

$$(25) \qquad M_{vdc} = -\frac{(1-\alpha)\,L\,M\alpha\,\delta_f\left(-\frac{G0_{ref}}{G0} + 1\right)}{(1-\alpha)\,\delta_{s1} + \delta_{s2}\,\alpha}\left(-\frac{\left(1 + \tau_{2\,ref}s\right)\cdot\left(\tau_\psi^2 s^2 + 2\,\xi_\psi\,\tau_\psi\,s + 1\right)}{\left(1 + 2\,\zeta_{\psi_{ref}}\,\tau_{\psi_{ref}}\,s + s^2\,\tau_{\psi_{ref}}^2\right)\cdot\left(1 + s\,\tau_{vdc}\right)} + \frac{\left(1 + \tau_2\,s\right)}{\left(1 + s\,\tau_{vdc}\right)}\right)$$

En d'autres termes, un moment de rotation en lacet généré par le freinage d'une roue est déterminé pour un angle de braquage déterminé du train de roues avant du châssis et pour une égalité du moment de lacet de référence calculé avec le moment de lacet effectif calculé.

Dans le cas où le véhicule dispose d'un système de freinage découplé et d'un système quatre roues directrices, le module de calcul peut déterminer, en fonction de l'angle de braquage du train de roues avant, un couple de valeurs pour un angle de braquage du train de roues arrière et pour un moment en lacet généré par les actionneurs pilotés associés au train de roues correspondant. De manière alternative, et notamment en fonction d'analyse effectuée par les inventeurs basée sur le modèle de comportement dynamique latérale du châssis, et décrite ci-après, l'unité de contrôle est configurée pour émettre une instruction de commande prioritaire dirigée vers le ou les actionneurs pilotés associés au système de braquage des roues, et notamment du train de roues arrière, avant d'émettre le cas échéant une instruction de commande dirigée vers le ou les actionneurs pilotés associés au système de freinage découplé.

On va maintenant décrire l'utilisation du modèle de comportement dynamique latéral du châssis et son analyse qualitative permettant par exemple de définir, tel que cela vient d'être décrit, quel actionneur piloté doit être prioritairement mis en œuvre.

Tel que cela a été décrit précédemment, l'allure des fonctions de transfert est identique pour les trois entrées que sont le braquage du train de roues avant, le braquage du train de roues arrière et le moment de rotation en lacet généré par le système de freinage découplé, chacune étant fonction d'un gain statico-dynamique Go.

A titre d'exemple, l'étude du gain statico-dynamique en vitesse de lacet en fonction de l'entrée en braquage des trains roulants, c'est-à-dire en étudiant les équations (15) et (16) précédemment évoquées, permet de constater que, pour une entrée de braquage, que le train roulant soit le train avant ou arrière, le gain est alors donné par :

$$(26) \qquad G0 = \frac{V}{L + (\delta s_1 - \delta s_2)\,V^2}$$

Ce gain fait apparaître deux grandeurs fondamentales de manière explicite. Une première grandeur fondamentale L caractérise l'empattement du véhicule, et une deuxième grandeur fondamentale $(\delta s_1 - \delta s_2)$ caractérise l'écart entre les dérives spécifiques avant et arrière, également appelé gradient de sous-virage.

Le gain est maximum à la vitesse caractéristique donnée par :

$$(27) \qquad V_{ch} = \sqrt{\frac{L}{\delta s_1 - \delta s_2}}$$

Le module de calcul considère cette relation pour déterminer la dérive spécifique du train de roues arrière à appliquer en fonction de la dérive spécifique du train de roues avant.

L'étude du comportement dynamique des fonctions de transfert et tout particulièrement des zéros de ces différentes fonctions de transfert permet également une analyse qualitative à noter.

En ce qui concerne le braquage des roues du train avant, la constante de temps du zéro est proportionnelle à la dérive spécifique arrière à vitesse donnée, avec :

$$(28) \qquad \tau_2 = V\delta s_2$$

Si le braquage est réalisé par le train de roues arrière, la constante de temps du zéro est proportionnel à la dérive spécifique avant, à vitesse donnée, avec :

$$(29) \qquad \tau_1 = V\delta s_1$$

Enfin si un moment de rotation en lacet est généré par le système de freinage découplé, la constante de temps du zéro s'exprime en fonction des dérives spécifiques des deux trains, avec :

$$(30) \qquad \tau_{vdc} = \frac{V\,\delta s_2\,\delta s_1}{(1-\alpha)\,\delta s_1 + \delta s_2\,\alpha}$$

Les inventeurs ont pu constater, pour un gradient de sous-virage égal à 0.3°/(m/s$^2$), que, d'un pont de vue dynamique, la rapidité de la réponse est incontestablement à l'avantage d'une entrée de braquage des roues du train arrière, puis d'une entrée de braquage des roues du train avant, puis d'un moment de rotation en lacet généré par le système de freinage découplé.

Il résulte de la description détaillée qui vient d'être donnée que l'invention atteint bien le but qu'elle s'était fixé, à savoir proposer une modification des dispositifs de contrôle existants qui permette de donner de façon fiable et rapide au véhicule plusieurs configurations selon la cible d'un modèle de référence. Ce but est obtenu tout particulièrement par le fait d'implémenter dans une unité de contrôle un modèle de comportement dynamique latéral de châssis qui est uniquement exprimé en fonction des caractéristiques système du châssis parmi lesquelles les dérives spécifiques des trains de roues avant et arrière. Les choix des dérives spécifiques peuvent ainsi permettre de modifier le gradient de sous-virage souhaité et la performance de guidage du train arrière notamment. Un autre intérêt de ce modèle est de différentier l'évolution du gain en lacet selon que celui soit effectué par une variation d'empattement ou une variation de gradient de sous-virage (écart entre les dérives spécifiques).

**Revendications**

**1.** Dispositif de contrôle de direction (10) d'un véhicule automobile (1) comportant au moins un actionneur piloté associé à un système de braquage (3, 4) d'une roue du véhicule (2) et/ou un actionneur piloté associé à un système de freinage découplé (6) au niveau d'une roue du véhicule (2), ledit dispositif de contrôle comportant au moins une unité de contrôle (12) configurée pour récupérer au moins une valeur caractéristique du roulage du véhicule et pour émettre en fonction de cette ou ces valeurs récupérées une instruction de commande (13) à l'au moins un actionneur piloté (3,4,6), **caractérisé en ce que** l'unité de contrôle (12) comporte un module de calcul (14) sur lequel est implémenté un modèle de comportement dynamique latéral du châssis (16) du véhicule dans lequel au moins une grandeur physique spécifique du comportement dynamique latéral est exprimée en fonction des prises d'angle de dérive des trains sous accélération transversale ($\delta s_1$, $\delta s_2$), de chaque train de roues avant et arrière du véhicule.

**2.** Dispositif de contrôle de direction selon la revendication 1, **caractérisé en ce que** le modèle de comportement dynamique latéral du châssis (16) implémenté dans le module de calcul (14) est configuré de sorte qu'au moins la vitesse de lacet est exprimée en fonction des dérives spécifiques ($\delta s_1$, $\delta s_2$) de chacun des trains de roues avant et arrière du véhicule.

3. Dispositif de contrôle de direction selon la revendication précédente, **caractérisé en ce que** le modèle de comportement dynamique latéral du châssis (16) est configuré pour exprimer une fonction de transfert entre ladite vitesse de lacet et le système de braquage du train de roues avant et/ou du train de roues arrière, ainsi qu'une fonction de transfert entre un moment de lacet exercé par le ou les actionneurs associé au système de freinage découplé, en fonction d'un gain statico-dynamique défini en fonction des dérives spécifiques ($\delta s_1, \delta s_2$) des trains de roues avant et arrière du véhicule.

4. Dispositif de contrôle de direction selon la revendication précédente, **caractérisé en ce que** l'unité de contrôle (12) est configurée pour émettre une instruction de commande (13) prioritaire dirigée vers le ou les actionneurs pilotés associés au système de braquage (3,4), avant d'émettre le cas échéant une instruction de commande (13) dirigée vers le ou les actionneurs pilotés associés au système de freinage découplé (6).

5. Dispositif de contrôle de direction selon la revendication 3 ou 4, **caractérisé en ce que** le gain statico-dynamique relatif à chacun des systèmes de braquage des trains de roue avant et arrière est fonction d'un gradient de sous-virage, c'est-à-dire une différence entre la dérive spécifique du train avant ($\delta s_1$) et la dérive spécifique du train arrière ($\delta s_2$).

6. Dispositif de contrôle de direction selon la revendication précédente, **caractérisé en ce que** l'unité de contrôle (12) est configurée pour émettre une instruction de commande (13) prioritaire dirigée vers le ou les actionneurs pilotés associés au système de braquage du train de roues arrière (4), avant d'émettre le cas échéant une instruction de commande (13) dirigée vers le ou les actionneurs pilotés associés au système de braquage du train de roues (3).

7. Dispositif de contrôle de direction selon l'une des revendications précédentes, dans lequel l'unité de contrôle (14) est configurée pour recevoir des paramètres d'entrée (18) et des paramètres dynamiques de roulage (19), et dans lequel l'unité de contrôle (12) est configurée pour dans un premier temps comparer une donnée de référence, calculée par application du modèle de comportement dynamique latéral du châssis à partir de valeurs des paramètres d'entrée et de valeurs de référence des paramètres dynamiques de roulage, à une donnée effective, calculée par application du modèle de comportement dynamique latéral du châssis à partir de valeurs des mêmes paramètres d'entrée et de valeurs effectives des paramètres dynamiques de roulage, et pour dans un deuxième temps générer des instructions d'action corrective en cas d'écart significatif entre la donnée de référence et la donnée effective.

8. Dispositif de contrôle de direction selon la revendication précédente, **caractérisé en ce que** la donnée de référence est un moment de lacet de référence ($M_{yaw\,ref}$) et la donnée effective est un moment de lacet effectif ($M_{yaw\,eff}$), l'unité de contrôle étant configurée pour calculer d'une part ledit moment de lacet de référence ($M_{yaw\,ref}$) en utilisant le modèle de comportement dynamique latéral du châssis (16) avec les valeurs de référence et pour calculer d'autre part ledit moment de lacet effectif ($M_{yaw\,eff}$) en utilisant le modèle de comportement dynamique latéral du châssis (16) avec les valeurs effectives.

9. Dispositif de contrôle de direction selon la revendication précédente, **caractérisé en ce que** l'unité de contrôle (12) est configurée pour calculer simultanément le moment de lacet de référence ($M_{yaw\,ref}$) et le moment de lacet effectif ($M_{yaw\,eff}$).

10. Dispositif de contrôle de direction selon la revendication 8 ou 9, dans lequel l'au moins un actionneur piloté (4) est un actionneur de l'angle de braquage d'une roue arrière du véhicule, l'angle de braquage de cette roue arrière ($\delta r$) étant déterminé pour un angle de train avant ($\delta f$) du châssis déterminé et pour une égalité du moment de lacet de référence ($M_{yaw\,ref}$) calculé avec le moment de lacet effectif ($M_{yaw\,eff}$) calculé.

11. Dispositif de contrôle de direction selon la revendication 8 ou 9, dans lequel l'au moins un actionneur piloté (6) est un actionneur de freinage découplé d'une roue du véhicule, un moment de lacet généré par le freinage de cette roue étant déterminé pour un angle de train avant ($\delta f$) du châssis déterminé et pour une égalité du moment de lacet de référence ($M_{yaw\,ref}$) calculé avec le moment de lacet effectif ($M_{yaw\,eff}$) calculé.

12. Dispositif de contrôle de direction selon l'une des revendications 7 à 11, dans lequel les paramètres d'entrée consistent au moins en la dérive spécifique du train avant ($\delta s_1$) et la dérive spécifique du train arrière ($\delta s_2$).

13. Dispositif de contrôle de direction selon la revendication précédente, dans lequel la dérive spécifique du train arrière ($\delta s_2$) est fixée et déterminée en fonction d'un type de conduite identifiée par l'unité de contrôle (12).

14. Dispositif de contrôle de direction selon l'une des revendications 8 à 13, dans lequel les paramètres d'entrée (18) consistent au moins en la distribution de masse et la distribution d'inertie du véhicule.

15. Dispositif de contrôle de direction selon l'une des revendications précédentes, **caractérisé en ce que** le modèle de comportement dynamique latéral du châssis (16) est écrit autour d'une décomposition modale de la relation entre lacet et dérive du véhicule, au moins une décomposition étant associée à un actionneur d'angle de braquage du train de roues avant (3) et au moins une autre décomposition étant associée à un actionneur d'angle de braquage du train de roues arrière (4) ou à un actionneur piloté d'un système de freinage découplé (6).

16. Dispositif de contrôle de direction selon la revendication précédente, **caractérisé en ce que** le modèle de comportement dynamique latéral du châssis (16) est configuré pour exprimer la vitesse de lacet en fonction de chacune desdites décompositions.

17. Dispositif de contrôle de direction selon la revendication précédente, dans lequel l'unité de contrôle (12) est configurée pour communiquer avec une pluralité de capteurs (8) aptes à mesurer lors du roulage du véhicule les valeurs récupérées par la suite par l'unité de contrôle.

18. Procédé de contrôle de direction d'un véhicule équipé d'un dispositif de contrôle selon l'une des revendications précédentes, au cours duquel on réalise dans un premier temps une étape de calcul (E1) où le module calcule d'une part un moment de rotation en lacet effectif (Myaw eff) et un moment de rotation en lacet de référence (Myaw ref), puis une étape de comparaison (E2) où le module de calcule égalise les deux moments de rotation en lacet calculé pour en déduire ultérieurement, dans une étape de déduction (E3), au moins une valeur que doivent respecter l'angle arrière et/ou le moment en lacet de freinage en fonction de l'angle de braquage du train de roues avant.

**Patentansprüche**

1. Lenkungssteuerungsvorrichtung (10) eines Kraftfahrzeugs (1), umfassend mindestens einen angesteuerten Aktor, der einem Lenksystem (3, 4) eines Rads des Fahrzeugs (2) zugeordnet ist, und/oder einen angesteuerten Aktor, der einem entkoppelten Bremssystem (6) an einem Rad des Fahrzeugs (2) zugeordnet ist, wobei die Steuerungsvorrichtung mindestens eine Steuerungseinheit (12) umfasst, die dazu ausgestaltet ist, mindestens einen für das Fahren des Fahrzeugs charakteristischen Wert abzurufen und in Abhängigkeit von diesem oder diesen abgerufenen Werten eine Betätigungsanweisung (13) an den mindestens einen angesteuerten Aktor (3,4,6) zu senden, **dadurch gekennzeichnet, dass** die Steuerungseinheit (12) ein Rechenmodul (14) umfasst, in das ein Modell des seitlichen dynamischen Verhaltens des Fahrgestells (16) des Fahrzeugs implementiert ist, wobei mindestens eine spezifische physikalische Größe des seitlichen dynamischen Verhaltens in Abhängigkeit von Schräglaufwinkelabgriffen der Achsen unter Querbeschleunigung ($\delta s_1$, $\delta s_2$) jeder Vorder- und Hinterradachse des Fahrzeugs ausgedrückt wird.

2. Lenkungssteuerungsvorrichtung nach Anspruch 1, **dadurch gekennzeichnet, dass** das Modell des seitlichen dynamischen Verhaltens des Fahrgestells (16), das in das Rechenmodul (14) implementiert ist, so ausgestaltet ist, dass mindestens die Giergeschwindigkeit in Abhängigkeit von den spezifischen Schrägläufen ($\delta s_1$, $\delta s_2$) jeder der Vorder- und Hinterradachsen des Fahrzeugs ausgedrückt wird.

3. Lenkungssteuerungsvorrichtung nach dem vorhergehenden Anspruch, **dadurch gekennzeichnet, dass** das Modell des seitlichen dynamischen Verhaltens des Fahrgestells (16) dazu ausgestaltet ist, eine Übertragungsfunktion zwischen der Giergeschwindigkeit und dem Lenksystem der Vorderradachse und/oder der Hinterradachse auszudrücken sowie eine Übertragungsfunktion zwischen einem Giermoment, das von dem oder den dem entkoppelten Bremssystem zugeordneten Aktoren ausgeübt wird, in Abhängigkeit von einer statisch-dynamischen Verstärkung, die in Abhängigkeit von den spezifischen Schrägläufen ($\delta s_1, \delta s_2$) der Vorder-und Hinterradachsen des Fahrzeug definiert wird.

4. Lenkungssteuerungsvorrichtung nach dem vorhergehenden Anspruch, **dadurch gekennzeichnet, dass** die Steuerungseinheit (12) dazu ausgestaltet ist, eine vorrangige Betätigungsanweisung (13) zu senden, die an den oder die angesteuerten Aktoren gerichtet ist, die dem Lenksystem (3,4) zugeordnet sind, bevor gegebenenfalls eine Betätigungsanweisung (13) gesendet wird, die an den oder die angesteuerten Aktoren gerichtet ist, die dem entkoppelten Bremssystem (6) zugeordnet sind.

5. Lenkungssteuerungsvorrichtung nach Anspruch 3 oder 4, **dadurch gekennzeichnet, dass** die statisch-dynamische Verstärkung bezüglich jedes der Lenksysteme der Vorder-und Hinterradachsen von einem Untersteuerungsgradienten abhängig ist, d. h. einer Differenz zwischen dem spezifischen Schräglauf der Vorderachse ($\delta s_1$) und dem spezifischen Schräglauf der Hinterachse ($\delta s_2$).

6. Lenkungssteuerungsvorrichtung nach dem vorhergehenden Anspruch, **dadurch gekennzeichnet, dass** die Steuerungseinheit (12) dazu ausgestaltet ist, eine vorrangige Betätigungsanweisung (13) zu senden, die an den oder die angesteuerten Aktoren gerichtet ist, die dem Lenksystem der Hinterradachse (4) zugeordnet sind, bevor gegebenenfalls eine Betätigungsanweisung (13) gesendet wird, die an den oder die angesteuerten Aktoren gerichtet ist, die dem Lenksystem der Radachse (3) zugeordnet sind.

7. Lenkungssteuerungsvorrichtung nach einem der vorhergehenden Ansprüche, wobei die Steuerungseinheit (14) dazu ausgestaltet ist, Eingangsparameter (18) und dynamische Fahrparameter (19) zu empfangen, und wobei die Steuerungseinheit (12) dazu ausgestaltet ist, zunächst einen Referenzdatenwert, der in Anwendung des Modells des seitlichen dynamischen Verhaltens ausgehend von Werten der Eingangsparameter und von Referenzwerten der dynamischen Fahrparameter berechnet wird, mit einem Istdatenwert zu vergleichen, der durch Anwenden des Modells des seitlichen dynamischen Verhaltens des Fahrgestells ausgehend von Werten desselben Eingangsparameter und von Istwerten der dynamischen Fahrparameter berechnet wird, und anschließend Anweisungen zum korrigierenden Einwirken im Fall einer signifikanten Abweichung zwischen dem Referenzdatenwert und dem Istdatenwert zu erzeugen.

8. Lenkungssteuerungsvorrichtung nach dem vorhergehenden Anspruch, **dadurch gekennzeichnet, dass** der Referenzdatenwert ein Referenzgiermoment ($M_{yaw\,ref}$) ist und der Istdatenwert ein Istgiermoment ($M_{yaw\,eff}$) ist, wobei die Steuerungseinheit dazu ausgestaltet ist, zum einen das Referenzgiermoment ($M_{yaw\,ref}$) unter Verwendung des Modells des seitlichen dynamischen Verhaltens des Fahrgestells (16) mit den Referenzwerten zu berechnen und zum anderen das Istgiermoment ($M_{yaw\,eff}$) unter Verwendung des Modells des seitlichen dynamischen Verhaltens des Fahrgestells (16) mit den Istwerten zu berechnen.

9. Lenkungssteuerungsvorrichtung nach dem vorhergehenden Anspruch, **dadurch gekennzeichnet, dass** die Steuerungseinheit (12) dazu ausgestaltet ist, gleichzeitig das Referenzgiermoment ($M_{yaw\,ref}$) und das Istgiermoment ($M_{yaw\,eff}$) zu berechnen.

10. Lenkungssteuerungsvorrichtung nach Anspruch 8 oder 9, wobei der mindestens eine angesteuerte Aktor (4) ein Aktor des Lenkwinkels eines Hinterrads des Fahrzeugs ist, wobei der Lenkwinkel dieses Hinterrads ($\delta r$) für einen bestimmten Vorderachswinkel ($\delta f$) des Fahrgestells und für eine Gleichheit des berechneten Referenzgiermoments ($M_{yaw\,ref}$) mit dem berechneten Istgiermoment ($M_{yaw\,eff}$) bestimmt wird.

11. Lenkungssteuerungsvorrichtung nach Anspruch 8 oder 9, wobei der mindestens eine angesteuerte Aktor (6) ein Aktor zur entkoppelten Bremsung eines Rads des Fahrzeugs ist, wobei ein durch das Bremsen dieses Rads erzeugtes Giermoment für einen bestimmten Vorderachswinkel ($\delta f$) des Fahrgestells und für eine Gleichheit des berechneten Referenzgiermoments ($M_{yaw\,ref}$) mit dem berechneten Istgiermoment ($M_{yaw\,eff}$) bestimmt wird.

12. Lenkungssteuerungsvorrichtung nach einem der Ansprüche 7 bis 11, wobei die Eingangsparameter mindestens in dem spezifischen Schräglauf der Vorderachse ($\delta s_1$) und dem spezifischen Schräglauf der Hinterachse ($\delta s_2$) bestehen.

13. Lenkungssteuerungsvorrichtung nach dem vorhergehenden Anspruch, wobei der spezifische Schräglauf der Hinterachse ($\delta s_2$) in Abhängigkeit von einem durch die Steuerungseinheit (12) identifizierten Fahrtyp festgelegt und bestimmt wird.

14. Lenkungssteuerungsvorrichtung nach einem der Ansprüche 8 bis 13, wobei die Eingangsparameter (18) mindestens in der Massenverteilung und der Trägheitsverteilung des Fahrzeugs bestehen.

15. Lenkungssteuerungsvorrichtung nach einem der vorhergehenden Ansprüche, **dadurch gekennzeichnet, dass** das Modell des seitlichen dynamischen Verhaltens des Fahrgestells (16) um eine modale Zerlegung der Beziehung zwischen Gieren und Schräglauf des Fahrzeugs herum geschrieben ist, wobei mindestens eine Zerlegung einem Lenkwinkelaktor der Vorderradachse (3) zugeordnet ist und wobei mindestens eine andere Zerlegung einem Lenkwinkelaktor der Hinterradachse (4) oder einem angesteuerten Aktor eines entkoppelten Bremssystems (6) zugeordnet ist.

**16.** Lenkungssteuerungsvorrichtung nach dem vorhergehenden Anspruch, **dadurch gekennzeichnet, dass** das Modell des seitlichen dynamischen Verhaltens des Fahrgestells (16) dazu ausgestaltet ist, die Giergeschwindigkeit in Abhängigkeit von jeder der Zerlegungen auszudrücken.

**17.** Lenkungssteuerungsvorrichtung nach dem vorhergehenden Anspruch, wobei die Steuerungseinheit (12) dazu ausgestaltet ist, mit einer Mehrzahl von Sensoren (8) zu kommunizieren, die geeignet sind, beim Fahren des Fahrzeugs die in der Folge von der Steuerungseinheit abgerufenen Werte zu messen.

**18.** Lenkungssteuerungsverfahren eines mit einer Steuerungsvorrichtung nach einem der vorhergehenden Ansprüche ausgestatteten Fahrzeugs, in dessen Verlauf zunächst ein Rechenschritt (E1) ausgeführt wird, bei dem das Modul zum einen ein Istgierdrehmoment ($M_{yaw\ eff}$) und ein Referenzgierdrehmoment ($M_{yaw\ ref}$) berechnet, dann ein Vergleichsschritt (E2), bei dem das Rechenmodul die beiden berechneten Gierdrehmomente egalisiert, um daraus später, in einem Ableitungsschritt (E3) mindestens einen Wert abzuleiten, den der hintere Winkel und/oder das Bremsgiermoment in Abhängigkeit von dem Lenkwinkel der Vorderradachse einhalten müssen.

**Claims**

**1.** Steering control device (10) for a motor vehicle (1), having at least one controlled actuator associated with a steering system (3, 4) of a wheel (2) of the vehicle and/or a controlled actuator associated with a decoupled braking system (6) at a wheel (2) of the vehicle, said control device having at least one control unit (12) configured to retrieve at least one value characteristic of the running of the vehicle and, as a function of this or these retrieved value or values, to transmit a command instruction (13) to the at least one controlled actuator (3, 4, 6),
**characterized in that** the control unit (12) has a calculation module (14) in which is implemented a vehicle chassis lateral dynamic behaviour model (16), wherein at least one specific physical variable for the lateral dynamic behaviour is expressed as a function of the drift angles ($\delta s_1$, $\delta s_2$) of the axle sets under transverse acceleration, for each of the front and the rear wheelset of the vehicle.

**2.** Steering control device according to Claim 1, **characterized in that** the chassis lateral dynamic behaviour model (16) implemented in the calculation module (14) is configured such that at least the yaw velocity is expressed as a function of the specific drifts ($\delta s_1$, $\delta s_2$) of each of the front and the rear wheelset of the vehicle.

**3.** Steering control device according to the preceding claim, **characterized in that** the chassis lateral dynamic behaviour model (16) is configured to express a transfer function between said yaw velocity and the steering system of the front wheelset and/or of the rear wheelset, and a transfer function between a yaw moment exerted by the actuator or actuators associated with the decoupled braking system, as a function of a static-dynamic gain defined as a function of the specific drifts ($\delta s_1$, $\delta s_2$) of the front and the rear wheelset of the vehicle.

**4.** Steering control device according to the preceding claim, **characterized in that** the control unit (12) is configured to transmit a priority command instruction (13) directed to the controlled actuator or actuators associated with the steering system (3, 4), before transmitting, if appropriate, a command instruction (13) directed to the controlled actuator or actuators associated with the decoupled braking system (6).

**5.** Steering control device according to Claim 3 or 4, **characterized in that** the static-dynamic gain relative to each of the steering systems of the front and rear wheelsets is a function of an understeering gradient, that is to say a difference between the specific drift ($\delta s_1$) of the front axle set and the specific drift ($\delta s_2$) of the rear axle set.

**6.** Steering control device according to the preceding claim, **characterized in that** the control unit (12) is configured to transmit a priority command instruction (13) directed to the controlled actuator or actuators associated with the rear wheelset steering system (4), before transmitting, if appropriate, a command instruction (13) directed to the controlled actuator or actuators associated with the wheelset steering system (3).

**7.** Steering control device according to one of the preceding claims, wherein the control unit (14) is configured to receive input parameters (18) and dynamic running parameters (19), and wherein the control unit (12) is configured firstly to compare a reference datum, calculated by applying the chassis lateral dynamic behaviour model on the basis of values for the input parameters and reference values for the dynamic running parameters, with an effective datum, calculated by applying the chassis lateral dynamic behaviour model on the basis of values for the same input parameters and effective values for the dynamic running parameters, and secondly to generate corrective action instructions in the event of a significant difference between the reference datum and the effective datum.

8. Steering control device according to the preceding claim, **characterized in that** the reference datum is a reference yaw moment ($M_{yaw\,ref}$) and the effective datum is an effective yaw moment ($M_{yaw\,eff}$), the control unit being configured to calculate, for the one part, said reference yaw moment ($M_{yaw\,ref}$) by using the chassis lateral dynamic behaviour model (16) with the reference values, and to calculate, for the other part, said effective yaw moment ($M_{yaw\,eff}$) by using the chassis lateral dynamic behaviour model (16) with the effective values.

9. Steering control device according to the preceding claim, **characterized in that** the control unit (12) is configured to simultaneously calculate the reference yaw moment ($M_{yaw\,ref}$) and the effective yaw moment ($M_{yaw\,eff}$).

10. Steering control device according to Claim 8 or 9, wherein the at least one controlled actuator (4) is an actuator for the steering angle of a rear wheel of the vehicle, the steering angle ($\delta r$) of this rear wheel being determined for a determined chassis front axle set angle ($\delta f$) and so as to balance the calculated reference yaw moment ($M_{yaw\,ref}$) with the calculated effective yaw moment ($M_{yaw\,eff}$).

11. Steering control device according to Claim 8 or 9, wherein the at least one controlled actuator (6) is an actuator for the decoupled braking of a wheel of the vehicle, a yaw moment generated by the braking of this wheel being determined for a determined chassis front axle set angle ($\delta f$) and so as to balance the calculated reference yaw moment ($M_{yaw\,ref}$) with the calculated effective yaw moment ($M_{yaw\,eff}$).

12. Steering control device according to one of Claims 7 to 11, wherein the input parameters consist of at least the specific drift ($\delta s_1$) of the front axle set and the specific drift ($\delta s_2$) of the rear axle set.

13. Steering control device according to the preceding claim, wherein the specific drift ($\delta s_2$) of the rear axle set is fixed and determined as a function of a driving style type identified by the control unit (12).

14. Steering control device according to one of Claims 8 to 13, wherein the input parameters (18) consist at least of the weight distribution and inertia distribution of the vehicle.

15. Steering control device according to one of the preceding claims, **characterized in that** the chassis lateral dynamic behaviour model (16) is written around a modal decomposition of the relationship between yaw and drift of the vehicle, at least one decomposition being associated with a steering angle actuator for the front wheelset (3) and at least one other decomposition being associated with a steering angle actuator for the rear wheelset (4) or with a controlled actuator of a decoupled braking system (6).

16. Steering control device according to the preceding claim, **characterized in that** the chassis lateral dynamic behaviour model (16) is configured to express the yaw velocity as a function of each of said decompositions.

17. Steering control device according to the preceding claim, wherein the control unit (12) is configured to communicate with a plurality of sensors (8) capable, when the vehicle is running, of measuring the values retrieved subsequently by the control unit.

18. Method for controlling the steering of a vehicle fitted with a control device according to one of the preceding claims, in the course of which method the following steps are carried out: firstly a calculation step (E1), in which the module calculates, for the one part, an effective yaw rotation moment ($M_{yaw\,eff}$) and a reference yaw rotation moment ($M_{yaw\,ref}$), then a comparison step (E2), in which the calculation module balances the two calculated yaw rotation moments so as to subsequently deduce therefrom, in a deduction step (E3), at least one value that must be met by the rear angle and/or the braking yaw moment as a function of the steering angle of the front wheelset.

[Fig 1]

[Fig 2]

[Fig 3]

## RÉFÉRENCES CITÉES DANS LA DESCRIPTION

**Documents brevets cités dans la description**

- DE 4010332 A1
- FR 2876337 A1
- DE 10053604 A1